# EUROPEAN PATENT APPLICATION

(11) **EP 2 254 360 A1**
(43) Date of publication of application: **24.11.2010**
(21) Application number: 10176424.9
(22) Date of filing: 20.12.2005
(51) Int. Cl.: H04W 12/08, H04L 29/06, H04W 12/12

(54) **Method, system and apparatus for implementing data service security in a mobile communication network**

(30) Priority: 28.12.2004 CN 200410103467
(62) Divisional of application: 05820675.6
(71) Applicant: Huawei Technologies Co., Ltd., Longgang District, Shenzhen Guangdong 518129 (CN)
(72) Inventor: Zheng, Zhibin, 518129, Shenzhen (CN); Liu, Tingyong, 518219, Shenzhen (CN); Tu, Weihua, 518129, Shenzhen (CN); Hou, Zhipeng, 518129, Shenzhen (CN)
(74) Representative: Thun, Clemens

(57) **Abstract**

A method for implementing data service security in a mobile communication system includes: obtaining security condition of a user terminal based on security-relevant configuration information reported by the user terminal; determining a security policy for the user terminal based on the security-relevant configuration information of the user terminal and security policy information stored, and sending the security policy determined to a packet service support node and/or the user terminal; implementing, by the packet service support node and/or the user terminal, a control process based on the security policy. The method, system and apparatus provided by the embodiments of the present invention introduce a security mechanism cooperated by the mobile communication network and a user terminal to effectively prevent the mobile communication network against viruses.

## Description

### Field of the Invention

The present invention relates to communication security technologies, and particularly, to a method, a system and an apparatus for implementing data service security in a mobile communication system.

### Background of the invention

Along with applications of data services in mobile communication systems, and particularly with the development of mobile terminals towards intelligence, the mobile terminals are equipped with not only conventional voice communication functions, but also Personal Digital Assistant (PDA) functions, and may provide intelligent operation systems and application software. Moreover, as Personal Computer Memory Card International Association (PCMCIA) is widely applied, more and more users obtain Internet services via mobile networks by inserting the PCMCIA cards into the mobile terminals. Being equipped with WINDOWS operation systems and various kinds of application software, the mobile terminals act more and more like personal computers. Therefore, viruses in fixed networks are also found in the mobile networks.

In the mobile network, there are two conventional ways to prevent viruses:
1) Install anti-virus software on a terminal side, the terminal scans data to be transmitted and removes possible viruses using the anti-virus software;
2) Install an anti-virus gateway on the mobile network, the anti-virus gateway implements online scan to the data traffic passing the anti-virus gateway and removes the viruses; this method requires high performance for the anti-virus gateway, e.g., in order to scan viruses in short messages, a short message gateway needs virus scan and remove functions.

It can be seen from the fore-going descriptions that, in conventional ways, anti-virus software is generally installed where the data traffic passes to scan and remove the viruses. However, all types of anti-virus software may only scan and remove known viruses and are not capable of preventing unknown viruses from spreading, thus unknown viruses are still disturbing network traffics.

Moreover, the impact of the viruses and worms may be brought out by many factors including the version of the operation system, the version of the anti-virus software and the capability of the anti-virus software. For example, greater damages may result from the absence of a certain operation system patch, e.g., the virus worm.Blaster damages a system through a bug in the Windows operation system. In fact, before a virus breaks out, providers of the operation system usually announce a corresponding patch; however, the virus may still spread to a large scope because the patch is not installed in many personal computers in time. In addition, for a terminal in which the anti-virus software has already been installed, the update of the anti-virus software is also very important.

### Summary of the invention

One embodiment of the present invention provides a method for implementing data service security in a mobile communication system, so as to effectively handle and control viruses in the mobile communication system.

Another embodiment of the present invention provides a system for implementing data service security in a mobile communication system. The system introduces a security mechanism cooperated by the mobile communication network and a user terminal to improve the defense of the mobile communication network against viruses.

Yet another embodiment of the present invention provides an apparatus for implementing data service security in a mobile communication system, so as to determine, store and distribute security policies.

According to an embodiment of the present invention, the method for implementing data service security in a mobile communication system includes:
obtaining security-relevant configuration information of a user terminal;
determining a security policy for the user terminal based on the security-relevant configuration information of the user terminal and security policy information stored, and sending the security policy determined to a packet service support node and/or the user terminal;
upon the receipt of the security policy, implementing, by the packet service support node and/or the user terminal, a control process based on the security policy.

Another embodiment of the present invention provides a system for implementing data service security in a mobile communication system, including:
a packet service support node;
a user terminal, communicates with the packet service support node through the mobile communication network; the system further includes:
   a policy service entity, connected to the packet service support node, and configured to obtain security-relevant configuration information of the user terminal, determine a security policy for the user terminal and distribute the security policy to the packet service support node and/or the user terminal.

Another embodiment of the present invention provides an apparatus for implementing data service security in a mobile communication system, including:
a security information obtaining module, configured to communicate with a user terminal, obtain security-relevant configuration information of the user terminal and send the security-relevant configuration information obtained to a security policy determination module;
the security policy determination module, configured to determine a security policy based on the security-relevant configuration information of the user terminal and security policy information stored in a security policy storage module and send the security policy determined to a security policy distribution module;
the security policy storage module, configured to store the security policy information;
the security policy distribution module, configured to send the security policy received to a designated network entity.

The method, system and apparatus for implementing data service security provided by the embodiments of the present invention in a mobile communication system add a policy service entity into the existing mobile communication system. The policy service entity is configured to store security policy information, determine a security policy based on the security-relevant configuration information of the user terminal, and notify the packet service support node on the network side and/or the user terminal to implement the security process. The embodiments of the present invention have the following advantages:
1) the security policy of the user terminal is associated with that on the network side, and a joint security mechanism is provided for the network and the user terminal. Through the protection on both the user terminal and the network side, not only known viruses, but also unknown viruses may be detected and removed, thus full dimensional security is achieved;
2) since security threats always come from the user terminal, the method provided by an embodiment of the present invention determines a security policy based on the security-relevant configuration information reported by the user terminal, therefore implements control on the user terminal. The method provided by an embodiment of the present invention may implement security control on the headstream, and effectively prevent the security threats from spreading. And, with the cooperation of the network side, the virus may be effectively handled and restricted;
3) with regard to cell phone viruses that tend to be more and more serious in the future, effective security measures may be taken based on the system architecture provided by the embodiments of the present invention to control viruses in the mobile communication network, and further prevent the spreading of cell phone viruses;
4) the embodiments of the present invention may obtain the security condition of the user terminal and determine a security policy according to the security condition of the user terminal, and instructs the packet service support node and/or the user terminal to implement a control process according to the security policy, therefore the embodiments of the present invention may prevent the network from virus infection, especially worm infection;
5) if the packet service support node is a GGSN, the embodiments of the present invention support security control over data packets on both uplink and downlink, thus it is possible to effectively prevent attacks from the mobile network to a public network, and vice versa. Moreover, the implementation of the security policy may be very flexible, i.e., it may be implemented in the GGSN, or implemented in the SSGN or the RNC which is notified to implement the control process by the GGSN;
6) the embodiments of the present invention only need a minor modification or a simple additional protocol to the function modules in the packet service support node, the user terminal and the security gateway to achieve effective security interworking and implement data packets security process. The implementation of the embodiments of the present invention is simple and convenient without increasing hardware cost.

### Brief Description of the Drawings

Fig. 1 is a schematic structure of a system according to an embodiment of the present invention.
Fig. 2 is a schematic structure of another system according to an embodiment of the present invention.

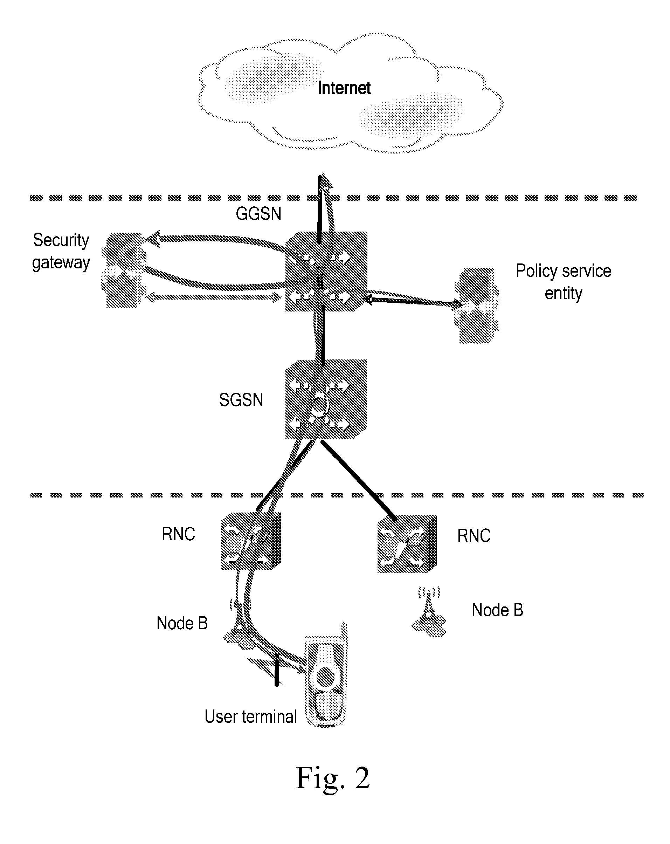

Fig. 2 is a flow chart of a method for implementing data service security according to an embodiment of the present invention.

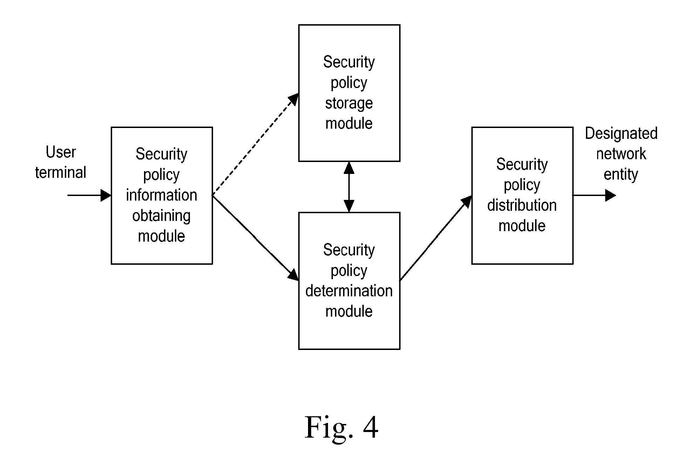

Fig. 4 is a schematic diagram illustrating a structure of the apparatus according to an embodiment of the present invention.

### Embodiments of the Invention

The embodiments of the present invention add a policy service entity into the mobile communication network. The policy service entity determines a security policy based on the security-relevant configuration information of a user terminal and notifies a packet service support node on the network side and/or the user terminal to implement a security process according to the determined security policy.

The policy service entity may be a policy server, a function module embedded in a network entity, or a card. The user terminal may be a mobile intelligent terminal or a portable terminal with card slot. The packet service support node on the network side may be a Serving GRPS Support Node (SGSN), a Gateway GPRS Support Node (GGSN) or a Packet Data Support Node (PDSN).

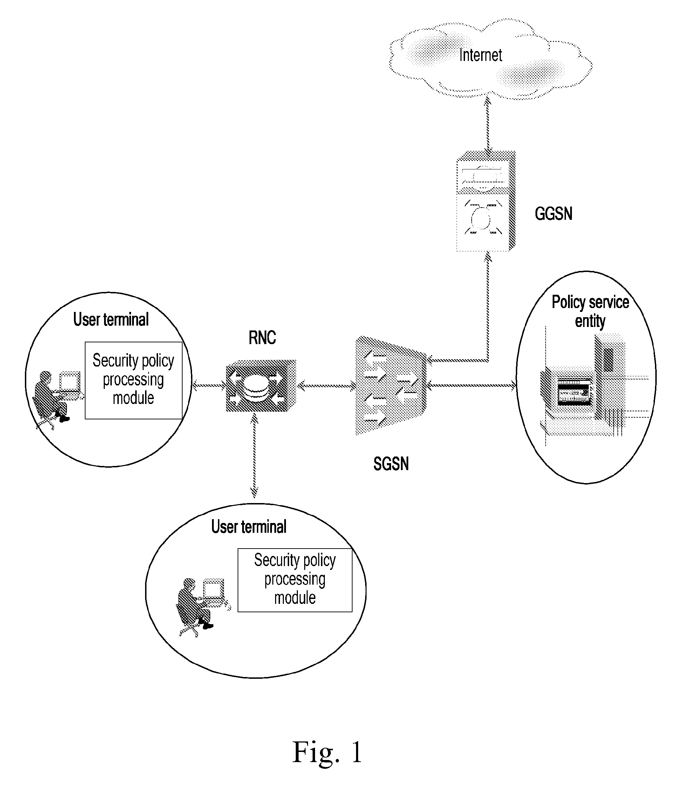

As shown in Fig. 1, the system for implementing data service security in the mobile communication system in accordance with an embodiment of the present invention includes a policy service entity, an SGSN and multiple user terminals. The policy service entity is connected to the SGSN directly or through a network, and configured to determine security policies. The policy service entity may interact with the user terminals through the SGSN, obtain the security-relevant configuration information of the user terminals, determine appropriate security policies for different user terminals based on the security-relevant configuration information of the user terminals and the security policy information stored in the policy service entity, and distribute the determined security policies to the user terminals or the SGSN. The policy service entity may store the security policy information issued by a core network device, or directly stores the configured security policy information.

The policy service entity may be an independent policy server, or a function module in a network entity such as SGSN, or a card equipped with the policy management function and inserted into an SGSN. The user terminal may be the mobile intelligent terminal or the portable terminal with card slot, or any other mobile terminals capable of interacting with the policy service entity to exchange security information.

To interwork with the policy service entity, the user terminal is equipped with a security policy processing module. The security policy processing module is configured to receive instructions from the policy service entity and perform corresponding operations, e.g., when the policy service entity sends a request to the user terminal requiring security-relevant configuration information of the user terminal, the security policy processing module collects, upon the receipt of the request, security-relevant configuration information of the user terminal and reports the security-relevant configuration information to the policy service entity. In this way, the policy service entity may obtain, through the security policy processing module, the security- relevant configuration information of the user terminal, including the version information of the operation system of the user terminal, the information of the anti-virus software of the user terminal and the installation condition of the patch.

The security policy processing module may also initiatively reports the security-relevant configuration information of the user terminal to the policy service entity at a fixed time, or regularly, or upon any change in the security-relevant configuration information of the user terminal. The security policy processing module may be independent software, thus the user terminal communicating with the policy service entity only needs to install the software. The security policy processing module may also store anti-virus software.

The policy service entity, connected to the SGSN, stores the security-relevant configuration information of the user terminals. After a security protocol negotiation between the policy service entity and the security policy processing module of the user terminal, i.e., after a mutual-trust relationship on security is established between the policy service entity and the security policy processing module of the user terminal, the policy service entity may send a request to the user terminal requiring to collect security-relevant configuration information of the user terminal. The user terminal reports the security-relevant configuration information, e.g., the information of the anti-virus software, installation information of the patch, etc., to the policy service entity.

In order to enable the SGSN to control the user terminal according to the requirement of the policy service entity, a security policy processing module interworking with the policy service entity and a protocol used for negotiation with the policy service entity are added into the SGSN. In this way, the SGSN may control the user terminal according to the security policy from the policy service entity, and on the other hand, may provide security policy requirement for the policy service entity. The protocol used for the negotiation between the SGSN and the policy service entity includes the mutually agreed interaction method and message format.

As shown in Fig. 2, a system for implementing data service security in the mobile communication system in accordance with an embodiment of the present invention includes a policy service entity, a GGSN and multiple user terminals as well as an SGSN, an RNC and a Node B. The policy service entity is connected to the GGSN directly or through the network, configured to determine security policies for the user terminals. The policy service entity may interact with the user terminals through the GGSN, and further through the SGSN, the RNC and the Node B, obtain the security-relevant configuration information of the user terminals, determine appropriate security policies for different user terminals based on the security-relevant configuration information of the user terminals and the security policy information stored in the policy service entity, and distribute the determined security policies to the user terminals or the GGSN. The policy service entity may store the security policy information issued by a core network device, or directly stores the configured security policy information.

The policy service entity may be an independent policy server, or a function module in a network entity such as a GGSN, or a card equipped with the policy management function and inserted into the GGSN. The user terminal may be the mobile intelligent terminal or the portable terminal with card slot, or any other mobile terminals capable of interacting with the policy service entity to exchange security information.

To interwork with the policy service entity, the user terminal is equipped with a security policy processing module. The security policy processing module is configured to receive instructions from the policy service entity and perform corresponding operations, e.g., when the policy service entity sends a request to the user terminal requiring security-relevant configuration information of the user terminal, the security policy processing module collects, upon the receipt of the request, security-relevant configuration information of the user terminal and reports the security-relevant configuration information to the policy service entity. In this way, the policy service entity may obtain, through the security policy processing module, the security- relevant configuration information of the user terminal, including the version information of the operation system of the user terminal, the information of the anti-virus software of the user terminal and the installation condition of the patch.

The security policy processing module may also initiatively reports the security-relevant configuration information of the user terminal to the policy service entity at a fixed time, or regularly, or upon any change in the security-relevant configuration information of the user terminal. The security policy processing module may be independent software. The user terminal communicating with the policy service entity only needs to install the software; the security policy processing module may also store anti-virus software.

The policy service entity interacts with the user terminal through the GGSN, SGSN, RNC and Node B, in which the SGSN, RNC and the Node B transmit the interaction information transparently.

The policy service entity, which is connected to the GGSN, stores the security-relevant configuration information of the user terminals. After a security protocol negotiation between the policy service entity and the security policy processing module of the user terminal, i.e., after a mutual-trust relationship on security is established between the policy service entity and the security policy processing module of the user terminal, the policy service entity may send a request to the user terminal requiring to collect security-relevant configuration information. The user terminal reports security-relevant configuration information, e.g., the information of the anti-virus software, installation information of the patch, etc., to the policy service entity.

In order to enable the GGSN to control the user terminal according to the requirement of the policy service entity, a security policy processing module interworking with the policy service entity and a protocol used for negotiation with the policy service entity are added into the SGSN. In this way, the GGSN may control the user terminal according to the security policy from the policy service entity, and on the other hand, may provide security policy requirement for the policy service entity. The protocol used for the negotiation between the GGSN and the policy service entity includes the mutually agreed interaction method and message format.

The GGSN is able to resolve the uplink and downlink IP packets in layer 7 and has a redirection function, therefore, the system provided by an embodiment of the present invention may further include one or more security gateways that are configured to implement different security functions or detect different kinds of viruses. The GGSN may redirect the IP packets to the security gateway for further security detection, e.g., redirects the IP packets to an anti-virus gateway. The anti-virus gateway scans the IP packets and removes viruses in the IP packets, and returns the IP packets to the GGSN, and then sends the IP packets to the public network such as the Internet through the GGSN.

Similarly, the GGSN may also redirect the IP packets from the public network to the security gateway. The security gateway processes the IP packets, e.g., an anti-virus gateway scans the IP packets, removes the viruses in the IP packets, and returns the IP packets to the GGSN. Then the GGSN transmits the IP packets through the SGSN, the RNC and the Node B to the user terminal such as a mobile terminal. To which security gateway the GGSN send the IP packets is decided according to the security policy determined by the policy service entity. For example, provided there are three security gateways in a network, each of them is in charge of IP packets from different IP addresses respectively, the policy service entity may determine that the IP packets with addresses from 10.10.10.0 to 10.10.10.256 shall be redirected to the first security gateway for security detection.

In the system shown in Fig. 2, after receiving the security policy, instead of executing the security policy, the GGSN may send relevant security policy control information, e.g., deactivate information, to the SGSN or the RNC, the SGSN or the RNC implements corresponding operation. In addition, the policy service entity may also be connected to the SGSN directly to perform unidirectional control, since the SGSN cannot resolve the IP packets, the SGSN may only implement simple security policies, e.g., block the user terminal of a certain IP address.

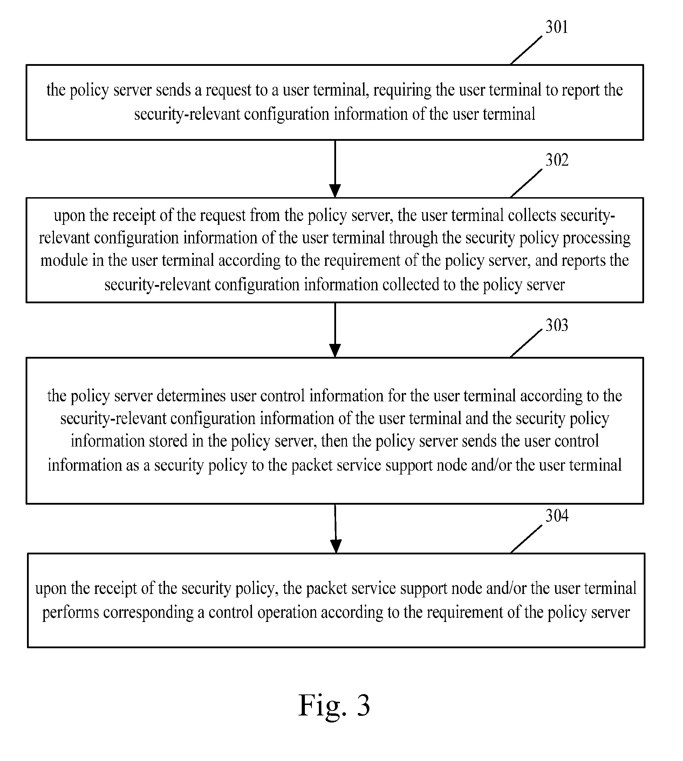

Based on the systems shown in Fig.1 and Fig.2, the method provided by an embodiment of the present invention is shown in Fig. 3, in which the policy service entity is a policy server, the SGSN and the GGSN are generally referred to packet service support node. The method includes the steps of:
Step 301: the policy server sends a request to a user terminal, requiring the user terminal to report the security-relevant configuration information of the user terminal. The user terminal may be a mobile intelligent terminal or a portable terminal with card slot.
   In this step, the request may be initiated by the policy server at any time, and be transmitted to the user terminal through the SGSN transparently. The request includes an indicator indicating the required information, e.g., indicating the user terminal to report the installation information of the patch. The format of the request may be determined through negotiation between the policy server and the user terminal. For example, different fields in the request may represent different types of information required by the policy server.
Step 302: upon the receipt of the request from the policy server, the user terminal collects security-relevant configuration information of the user terminal through the security policy processing module in the user terminal according to the requirement of the policy server, and reports the security-relevant configuration information collected to the policy server.
Step 303: after receiving the security-relevant configuration information of the user terminal, the policy server determines user control information for the user terminal according to the security-relevant configuration information of the user terminal and the security policy information stored in the policy server, then the policy server sends the user control information as a security policy to the packet service support node and/or the user terminal.
   The security policy information stored in the policy server includes: information of the patch that should be installed on the user terminal, information of the anti-virus software that should be installed on the user terminal, etc. The packet service support node may be a GGSN, or an SGSN, or a PDSN.
Step 304: upon the receipt of the security policy, the packet service support node and/or the user terminal performs a corresponding control operation according to the requirement of the policy server. For example, if the security policy is to scan for a certain virus in the data from a certain user terminal, the GGSN may send, upon the receipt of the data to or from the IP address of the user terminal, the data to a designated security gateway for virus scan; or the GGSN transmits the data of the user terminal through a designated security gateway.

In the system shown in Fig. 1, the policy server sends the security policy to the SGSN, and the SGSN performs corresponding control operation according to the security policy received. In the system shown in Fig. 2, the policy server sends the security policy to the GGSN, the GGSN performs corresponding control operation according to the security policy received or notifies the SGSN to perform corresponding operation, e.g., to block the IP packets from the user terminal with certain IP address.

The GGSN may also redirect designated uplink and downlink IP packets to a security gateway for corresponding security process, e.g., virus scan. After the security process, the security gateway returns the IP packets to the GGSN for subsequent transmission and process.

The packet service support node may send a policy request to the policy server, and the policy server executes steps 301 to 304 upon the receipt of the policy request. The user terminal may also initiatively report the security-relevant configuration information of the user terminal to the policy server, and the policy server executes steps 303 and 304 upon the receipt of the security-relevant configuration information. The user terminal may report the security-relevant configuration information regularly, or at a fixed time, or upon any change in the security-relevant configuration information of the user terminal.

The policy service entity may, in the form of a card, be integrated into the packet service support node, such as the GGSN or the SGSN, to provide corresponding security service.

In the embodiments of the present invention, through the determination of the security policy by the policy service entity, the security condition of the user terminal may be detected on the network side, and the security threat information or potential threat will be reported to the policy service entity. The policy service entity determines a corresponding security policy for the user terminal through a verification and selection process, and the spread of the threat may be further controlled by the packet service support node.

Another embodiment of the present invention is described herein, demonstrating an example of patch installation management. Many damages caused by worms, such as worm.Blaster and worm.Sasser are also the result of not installing corresponding patches on the user terminal in time. The method provided by the present invention may prevent the virus from attacking the network.

In this embodiment, the packet service support node is an SGSN; the policy service entity is a policy server which stores the information of all patches that should be installed and relative information of each patch, e.g., the importance of each patch. The security-relevant configuration information of the user terminal is the installation information of the patch. In this embodiment, the method includes the steps of:
1) the policy server sends a request to the user terminal M, requiring the user terminal M to return the security-relevant configuration information of the operation system patch of the user terminal M;
2) upon the receipt of the request, the user terminal M obtains the information of the patch that has been installed in the operation system of the user terminal M through the security policy processing module of the user terminal M, and sends the security-relevant configuration information of the operation system patch to the policy server;
3) upon the receipt of the security-relevant configuration information of the operation system patch of the user terminal M, the policy server verifies the operation system patch installation condition of the user terminal M based on the security-relevant configuration information of the operation system patch from the user terminal M and the information stored in the policy server of all patches that should be installed, and finds out that an important patch has not been installed on the user terminal M, e.g., at least four patches, A, B, C and D, should be installed on each user terminal to ensure the basic security of the user terminals, while the user terminal M has only installed A, C and D without installing B;
4) the policy server sends a notification to the user terminal M, informing the user terminal M that a patch has not been installed, e.g., informing the user terminal M that patch B has not been installed; the policy server determines a security policy based on current information obtained, e.g., determines to restrict the bandwidth of the user terminal M and sends a bandwidth restriction message to the SGSN to restrict the bandwidth of the user terminal M;
5) upon the receipt of the bandwidth restriction message, the SGSN applies the bandwidth restriction to the user terminal M, or even blocks the network connection of the user terminal M.

And the user terminal M may determine whether to install the patch B according to the notification described in step 4).

In the fore-going example of the patch installation management, if the packet service support node is a GGSN, when the data packets from the user terminal M are transmitted to the GGSN, the GGSN may redirect the data packets received to the security gateway, such as an anti-virus gateway, for corresponding security examination to remove virus, and then the anti-virus gateway returns the data packets to the GGSN.

The policy service entity may be an independent implementing data service security apparatus in the mobile communication system. As shown in Fig. 4, the apparatus includes a security information obtaining module, a security policy determination module, a security policy storage module and a security policy distribution module.

The security information obtaining module communicates with the user terminal, obtains the security-relevant configuration information of the user terminal through interaction with the user terminal and sends the security-relevant configuration information obtained to the security policy determination module;
the security policy determination module is configured to determine a security policy based on the obtained security-relevant configuration information of the user terminal and the security policy information stored in the security policy storage module, and send the security policy determined to the security policy distribution module for distribution;
the security policy storage module is configured to store security policy information of the user terminals; and
the security policy distribution module is configured to send the security policy received to designated network entities, such as a user terminal, SGSN or GGSN.

The security information obtaining module may also be connected directly to the security policy storage module and store the security-relevant configuration information obtained as security policy information. The security policy storage module may also be connected to an external device such as a core network device and directly obtain and store the security policy information configured by the external device; and the security policy storage module may obtain security policy information configured by a configuration command through a man-machine interface.

The present invention may be applicable to 2G GPRS system, Enhanced Data rates for GSM Evolution (EDGE) system and 3G Wideband Code Division Multiple Access (WCDMA) system, Time Division-Synchronization Code Division Multiple Access (TD-SCDMA) system and Code Division Multiple Access (CDMA) 2000 system. The fore-going is only the preferred embodiments of the present invention and is not for use in limiting the protection scope thereof.

## Claims

1. A method for implementing data service security in a mobile communication system, comprising:
obtaining, by a policy service entity, security-relevant configuration information of a user terminal;
determining, by the policy service entity, a security policy for the user terminal based on the security-relevant configuration information of the user terminal and security policy information stored in the policy service entity;
sending, by the policy service entity, the security policy determined to a packet service support node on network side; and
upon the receipt of the security policy, implementing, by the packet service support node, a control process based on the security policy.

2. The method of claim 1, wherein the process of obtaining security-relevant configuration information of a user terminal comprises:
reporting initiatively, by the user terminal, the security-relevant configuration information currently collected of the user terminal, at a fixed time, or regularly, or upon any change in the security-relevant configuration information of the user terminal.

3. The method of claim 1, wherein the process of obtaining security-relevant configuration information of a user terminal comprises:
sending a request to the user terminal, requiring the user terminal to report the security-relevant configuration information;
upon the receipt of the request, collecting, by the user terminal, the security-relevant configuration information of the user terminal based on the request, and reporting the security-relevant configuration information collected.

4. The method of claim 3, further comprising:
before sending a request to the user terminal requiring the user terminal to report the security-relevant configuration information, sending, by the packet service support node, a policy request; and
upon the receipt of the policy request, sending the request to the user terminal, requiring the user terminal to report the security-relevant configuration information to the user terminal.

5. The method of any one of claims 1 to 4, wherein the security-relevant configuration information of the user terminal comprises at least one of: version information of the operation system of the user terminal, information of anti-virus software of the user terminal and installation condition of a patch.

6. The method of any one of claims 1 to 4, wherein the packet service support node is any one of: a Serving GPRS Support Node, SGSN, a Gateway GPRS Support Node, GGSN, and a Packet Data Support Node, PDSN.

7. The method of claim 1, wherein the packet service support node is a GGSN, the process of the packet service support node implementing a control process based on the security policy further comprising:
upon the receipt of the security policy, notifying, by the GGSN, a SGSN or a Radio Network Controller (RNC) to implement the control process based on the security policy.

8. The method of claim 1, wherein the packet service support node is a GGSN, the method further comprising:
redirecting, by the GGSN, received data packets to a security gateway for security processing; and
returning, by the security gateway, the data packets to the GGSN after the security processing.

9. The method of claim 8, wherein the security gateway is an anti-virus gateway, and the security processing comprises: scanning the received data packets for virus and removing the virus.

10. A system for implementing data service security in a mobile communication system, comprising:
a policy service entity, connected to a packet service support node, and configured to obtain security-relevant configuration information of a user terminal communicating with the packet service support node through the mobile communication network, determine a security policy for the user terminal and distribute the security policy to the packet service support node; and
the packet service support node, configured to receive the security policy from the policy service entity, and implement a control process based on the security policy.

11. The system of claim 10, wherein the packet service support node is any one of: a Serving GPRS Support Node, SGSN, a Gateway GPRS Support Node, GGSN, and a Packet Data Support Node, PDSN.

12. The system of claim 11, further comprising:
a security gateway, configured to implement a security process on data packets which are redirected to the security gateway by the packet service support node if the packet service support node is the GGSN.

13. An apparatus for implementing data service security in a mobile communication system, comprising:
a security information obtaining module, configured to communicate with a user terminal, obtain security-relevant configuration information of the user terminal and send the security-relevant configuration information obtained to a security policy determination module;
the security policy determination module, configured to determine a security policy according to the security-relevant configuration information and security policy information stored in a security policy storage module, and send the security policy determined to a security policy distribution module;
the security policy storage module, configured to store the security policy information;
the security policy distribution module, configured to send the security policy received to a packet service support node on network side.

14. The apparatus of claim 13, wherein the security policy storage module is further configured to receive and store security policy information configured by an external device and/or a configuration command.

15. The apparatus of claim 13 or 14, wherein the packet service support node on network side comprises at least one of: a Serving GPRS Support Node, SGSN and a Gateway GPRS Support Node, GGSN.
